# EUROPEAN PATENT SPECIFICATION

(11) **EP 0 473 416 B1**
(45) Date of publication and mention of the grant of the patent: **28.01.1998**
(21) Application number: 91307884.6
(22) Date of filing: 28.08.1991
(51) Int. Cl.: H04N 5/78, G11B 27/00, G11B 20/12, H04N 5/93, H04N 5/783

(54) **Video signal reproducing apparatus**
Videosignalwiedergabegerät
Appareil de reproduction de signal vidéo

(30) Priority: 29.08.1990 JP 225292/90
(43) Date of publication of application: 04.03.1992
(73) Proprietor: SONY CORPORATION, Tokyo 141 (JP)
(72) Inventor: Nishimura, Hajime, c/o Patents Division, Shinagawa-ku, Tokyo 141 (JP)
(74) Representative: Harris, Ian Richard

(56) References cited:
- DE-A- 3 737 054
- US-A- 4 644 415
- US-A- 4 858 029
- IEEE TRANSACTIONS ON BROADCASTING vol. 35, no. 4, December 1989, NEW YORK, US pages 348 - 356 SEISHI SASAKI & AL. '1/2-Inch cassette VTR for baseband HDTV signal recording'

## Description

This invention relates to video signal reproducing apparatus.

IEEE Transactions on Broadcasting 35 (1989) December, no 4, New York, USA, discloses a ½ inch cassette VTR for Baseband HDTV Signal Recording. An HDTV signal is recorded using a 2-channel 3-segment recording method. If the recorded signal is played back at a speed higher than the recording speed, the playback head traverses several tracks instead of only one track at a time. To reduce the resulting adverse effects a process called analog line shuffling recording is used, in which information distributed over a whole picture is recorded in three tracks, the tracks containing different portions of the portion information.

In high definition television (HDTV) systems the video signal bandwidth is much wider than that in a standard transmission system based on the NTSC format or the like, and it has been proposed to effect compression prior to signal transmission. One known method of such bandwidth compression is multiple sub-nyquist sampling encoding (MUSE).

When an HDTV signal is recorded by a video tape recorder (VTR) or the like, the recording band can be relatively narrowed by directly recording, without demodulation, the video signal band-compressed by MUSE (the MUSE signal), so simplifying the recording apparatus.

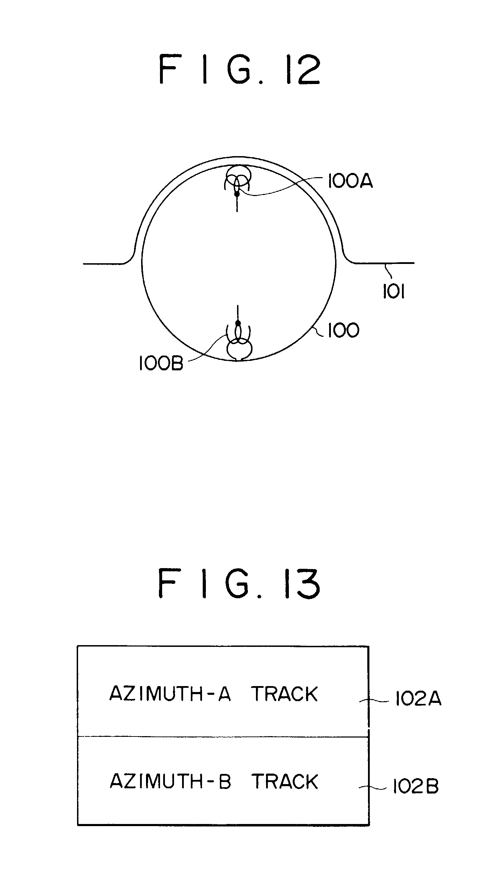

In a VTR for recording and reproducing such a MUSE signal, there has been proposed a segment recording process which forms an image of one field by a plurality of signal tracks. The MUSE signal has a narrower bandwidth in comparison, but is approximately twice as wide as a television signal based say on the NTSC format. Therefore, when MUSE signals are recorded on a magnetic tape 101 as shown in Figure 12 by means of two magnetic heads 100A and 100B which are mounted on a rotary head drum 100 with mutually different azimuths, the operation may comprise, as shown in Figure 13, first recording upper-half horizontal line signals of one field image on an azimuth-A track 102A by the magnetic head 100A having an azimuth A, and then recording lower-half horizontal line signals of one field image on an azimuth-B track 102B by the magnetic head 100B having an azimuth B.

With this process, each field is divided into two with a segment recording operation which records the upper half of one field on the track formed by the magnetic head 100A, and records the lower half of one field on the track formed by the magnetic head 100B, hence increasing the recordable amount for each field thereby to compensate for the wide signal band.

It is generally customary in a VTR that a fast-forward playback mode or a rewind playback mode is provided to move a magnetic tape in a forward or reverse direction at a speed higher than a standard speed. In such fast-forward or rewind playback operation, however, noise bars are generated in a reproduced image since the magnetic heads 100A and 100B scan the tracks recorded at mutually different azimuths.

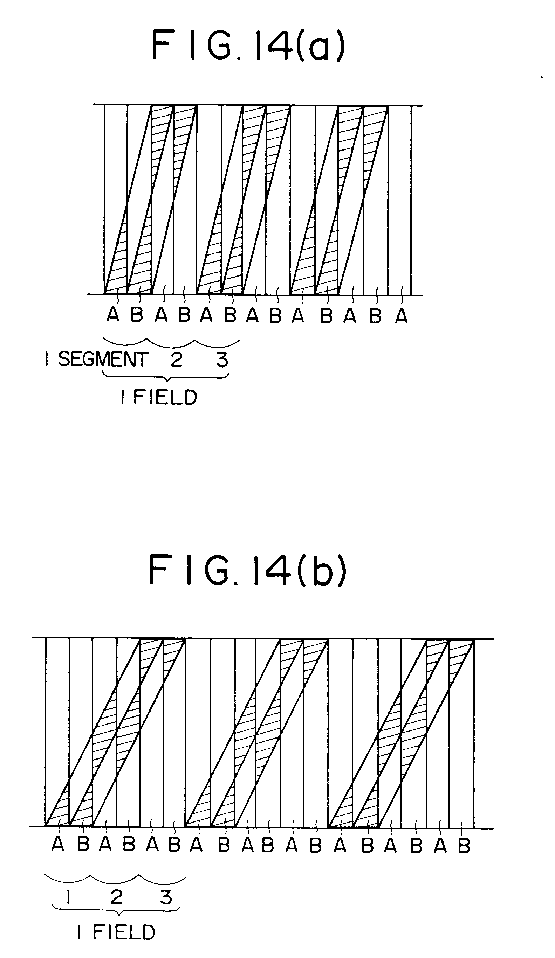

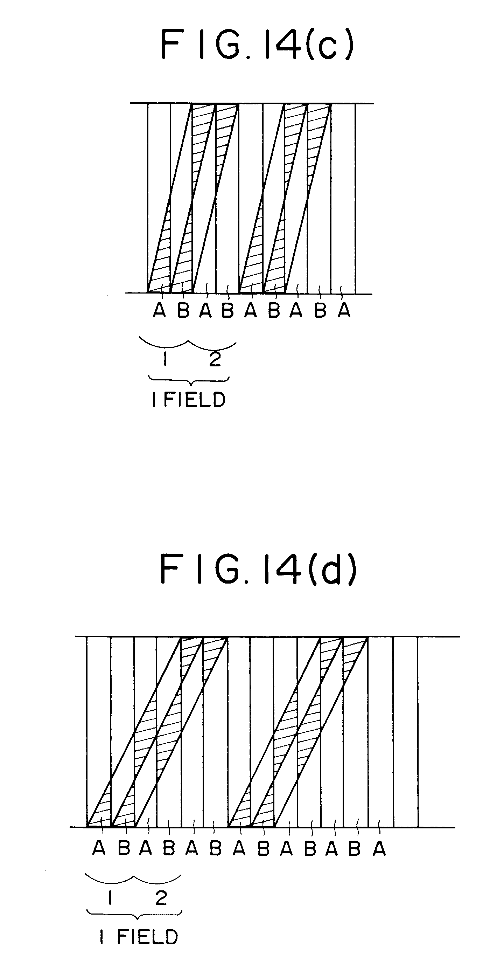

The loci of the magnetic heads are oblique as represented by thick frames in Figure 14(a) if a double-speed playback operation is performed by the use of a magnetic head where azimuth-A tracks denoted by vertical frames A and azimuth-B tracks denoted by vertical frames B adjacent to the azimuth-B tracks are formed alternately. Shaded portions of the tracks can be reproduced as the respective azimuth signals when the azimuth-A magnetic head is scanning an azimuth-A track during its scan of a thick-frame locus HA and when the azimuth-B magnetic head is scanning an azimuth-B track during its scan of a thick-frame locus HB.

However, when the magnetic heads are scanning the tracks formed with mutually different azimuths, the recorded signals fail to be reproduced at sufficiently high levels in blank portions other than the shaded portions in the thick frames, due to the difference between the azimuths, hence causing noise bars in the reproduced image.

US-A-4 644 415 discloses a magnetic video recording and reproducing apparatus. A tape travelling drive circuit of the apparatus drives a magnetic tape at a speed approximate to a value {2n±(1/m)} times the travelling speed for recording (n being a positive integer and m being a positive integer excluding 1). A detector detects an output level of a reproduced video signal. If the output level is higher than a predetermined level, the detector stores the reproduced video signal in a storage circuit for a specified period and at the same time provides the signal through a selector. If the output level is lower than the predetermined level, the reproduced video signal stored in the storage circuit is read out and provided through the selector. Thus, even if the output level is lowered, a picture of good quality with little noise can be reproduced.

Figure 14(a) illustrates a result of reproducing fields of a 2-channel 3-segment composition at double speed; Figure 14(b) illustrates a result of reproducing fields of a 2-channel 3-segment composition at triple speed; Figure 14(c) illustrates a result of reproducing fields of a 2-channel 2-segment composition at double speed; and Figure 14(d) illustrates a result of reproducing fields of a 2-channel 2-segment composition at triple speed. It is seen from such examples that the number of noise bars increases in accordance with a rise of the playback speed.

The above problem may be considered solvable by removing the signals of the portions with noise bars. However, for the tracks formed with the same azimuth, noise bars would appear at the same positions in the individual tracks, as obvious from the examples illustrated, which would deteriorate the quality of the reproduced image.

According to the present invention there is provided a video signal reproducing apparatus for fast playback of a magnetic tape recording medium where a video signal of one field is recorded on a plurality of tracks after being shuffled in such a manner that mutually adjacent lines on an image are positioned on different tracks, the apparatus comprising: a playback means including a rotary drum with a plurality of magnetic heads having mutually different azimuths for fast playing back said recording medium at a high (N + 1/2)-fold speed (where N is an integer) in comparison with a standard speed; a memory means for storing the video signal reproduced by said playback means; a detector means for detecting a noise bar in a manner to inhibit the signal writing in said memory means at the timing of generation of such noise bar; and means for controlling the writing in and reading out of the video signal from the memory means such that the noise bar of a track is replaced by a video signal from a preceding track of the same azimuth and the video signal is deshuffled by the same rule as that in the standard-speed playback mode.

Thus in an embodiment of the invention, since the recording medium with the video signal shuffled on a plurality of tracks of one field is played back at a high (N + 1/2)-fold speed, noise bars appear at different positions on mutually adjacent tracks having the same azimuth. The signal corresponding to the noise bar portion is interrupted, and the signal obtained from the preceding same-azimuth track is interpolated in such portion. The signals thus arranged are deshuffled by the same rule as that in the standard-speed playback mode, consequently to attain a substantially natural image while averting generation of any noise bar.

In an embodiment of the invention, the controlling means controls the operation of writing the signal in or reading out the signal from said memory means in such a manner that a plurality of lines in each field are composed of the same lines.

Embodiments of the invention can thus provide an apparatus of a simplified construction capable of reproducing in a fast mode without causing any noise bar.

The invention will now be described by way of example with reference to the accompanying drawings, throughout which like parts are referred to by like references, and in which:
Figure 1 illustrates motion loci (scanned tracks) of magnetic heads in a fast playback mode;
Figure 2 shows shuffled data;
Figure 3 is a timing chart of signals obtained during a fast playback mode in an apparatus with a 1-track memory and a 1-frame memory;
Figures 4 and 5 illustrate the playback operation shown in Figure 3;
Figure 6 is a block diagram of a video signal reproducing apparatus embodying the present invention;
Figure 7 is a timing chart of signals obtained in a fast playback mode executed in an apparatus with a 1-frame memory comprising four 1-track memories;
Figure 8 is a block diagram of a video signal reproducing apparatus representing another embodiment of the present invention;
Figure 9 is a timing chart of signals obtained during a playback mode in an apparatus with a 1-frame memory comprising two 1-field memories;
Figure 10 is a timing chart of signals obtained during a playback mode in an apparatus with a single 1-frame memory;
Figures 11(a) to 11(f) illustrate playback images in individual signal reproducing operations;
Figure 12 illustrates the positional relationship between heads and a tape;
Figure 13 illustrates tracks reproduced by the heads shown in Figure 12; and
Figures 14(a) to 14(d) illustrate motion loci of heads and noise bars caused in a known playback operation.

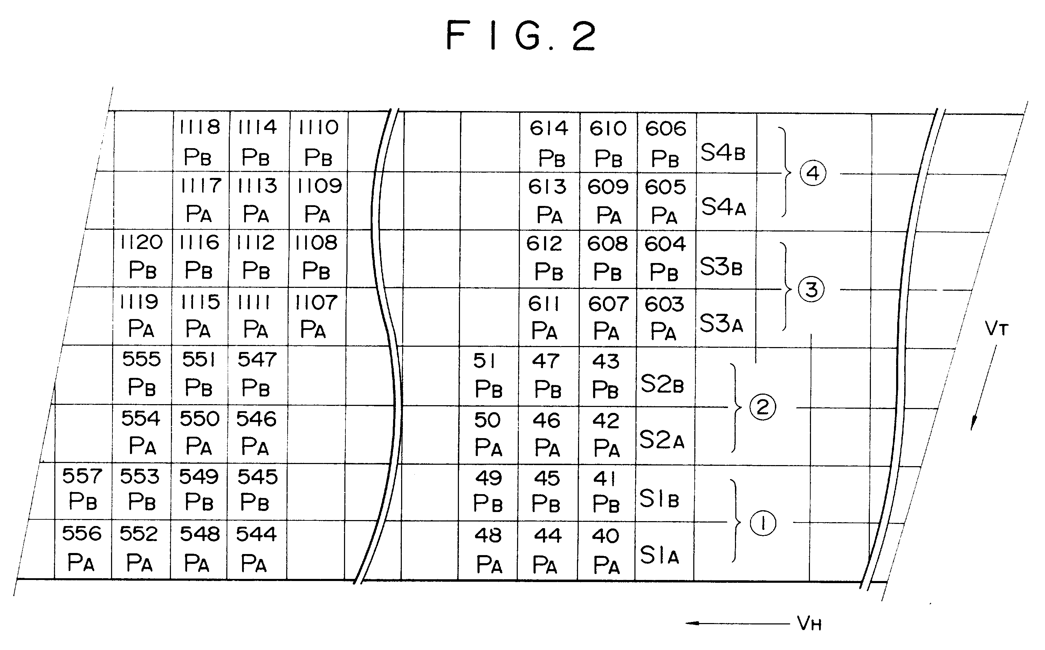

Figure 2 shows a tape format where data are shuffled every field under the condition that one field is composed of 2 channels and 2 segments (one frame is composed of 2 channels and 4 segments). In this diagram, arrows VH and VT indicate the direction of a head motion and the direction of a tape motion, respectively. Numerals 1 to 4 and S1A to S4B denote the following:
- 1: 1st segment
- 2: 2nd segment
- 3: 3rd segment
- 4: 4th segment
- S1A: azimuth-A track in 1st segment
- S1B: azimuth-B track in 1st segment
- S2A: azimuth-A track in 2nd segment
- S2B: azimuth-B track in 2nd segment
- S3A: azimuth-A track in 3rd segment
- S3B: azimuth-B track in 3rd segment
- S4A: azimuth-A track in 4th segment
- S4B: azimuth-B track in 4th segment

The example of Figure 2 represents one frame which is composed as follows:
- 1st field: consists of 1st segment and 2nd segment
- 2nd field: consists of 3rd segment and 4th segment
- 1 frame: consists of 1st field and 2nd field.

The data of the 1st field are dispersively recorded in sequence as denoted by numerals 40, 41, 42 and so forth on an azimuth-A track S1A in the 1st segment, an azimuth-B track S1B therein, an azimuth-A track S2A in the 2nd segment, and an azimuth-B track S2B therein. Similarly the data of the 2nd field are dispersively recorded in sequence as denoted by numerals 603, 604, 605 and so forth on an azimuth-A track S3A in the 3rd segment, an azimuth-B track S3B therein, an azimuth-A track in the 4th segment, and an azimuth-B track S4B therein.

In this embodiment, each data number represents the data corresponding to one line. More specifically, it signifies that mutually adjacent lines of the field image are shuffled on different tracks.

Suppose now that the heads for two channels (azimuth-A head and azimuth-B head) scan the tape simultaneously. The data 40, 44, 48, ... are reproduced sequentially from the track S1A in the first scanning, while the data 41, 45, 49, ... are reproduced sequentially from the track S1B during the same time. Thereafter the data 42, 46, 50, ... are reproduced sequentially from the track S2A in the second scanning, while the data 43, 47, 51, ... are reproduced sequentially from the track S2B during the same time. The data corresponding to one field are once stored in the memory, and then are read out therefrom after being deshuffled as data 40, 41, 42, ..., whereby a normal image can be reproduced.

Since the data are once shuffled, there exists only a small possibility that data drop-outs occur successively after the deshuffling, and any drop-out data can be replaced with the preceding or following data.

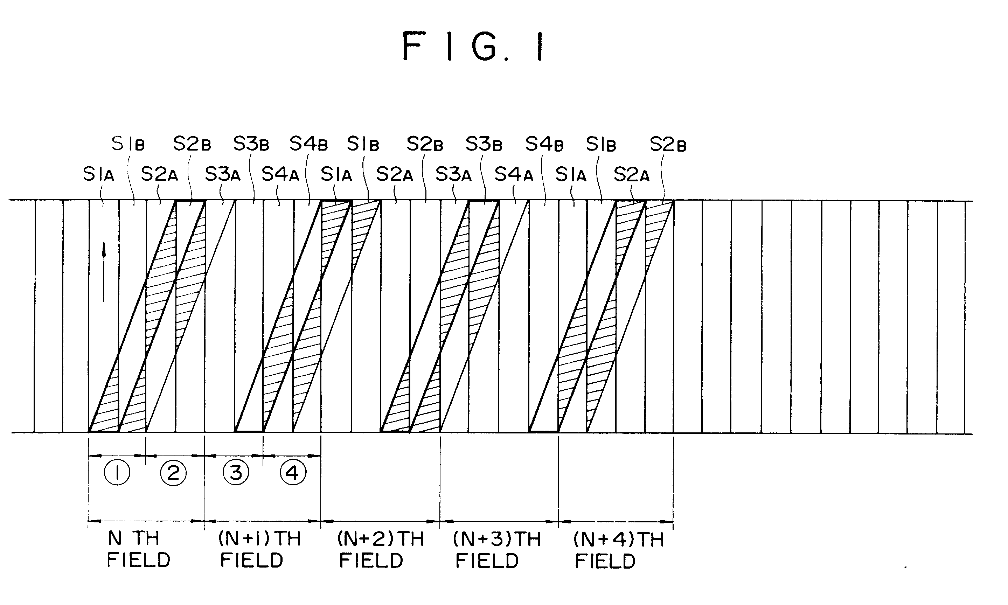

Figure 1 illustrates a track state obtained by playing back the data-recorded tape at a high (2.5-fold) speed. In a standard-speed playback mode, the head scans the vertical track S1A in the direction indicated by a vertical arrow and terminates playback of the track at its upper end in the drawing. However, when the tape is moved leftward in a fast operation performed at a 2.5-fold speed, the head arrives at the final end of the track S2B instead of the upper end of the track S1A. Consequently the scanning locus of the head is oblique instead of being vertical in the drawing.

As described above, one frame consists of two fields each comprising two segments. Since each segment has two channels (two tracks) with an azimuth A and an azimuth B, the tape portion represented by four pairs (eight in total) of oblique bands corresponds to the entire read area of one frame in a 2.5-fold speed fast playback mode. The two pairs of the left bands constitute a 1st field, while the two pairs of the right bands constitute a 2nd field.

For example, the azimuth-A read signal is obtained merely from the shaded areas of the azimuth-A tracks S1A, S2A, S3A, S4A ... and so forth. Meanwhile the bled areas other than the shaded areas are those where noise bars are caused. Such relationship exists with respect to the azimuth-B tracks as well. Therefore, if the noise-bar areas are replaced with the signal read out normally, it becomes possible to eliminate generation of noise bars. For the purpose of achieving such elimination, the data relative to the noise-bar areas are replaced with the data of the preceding same-azimuth track.

The data used for such replacement may be that of the area corresponding, in the preceding track, to the position where the noise bar appears. Such data replacement can be realized by performing a fast playback operation at an (N + 1/2)-fold speed (where N is a positive or negative integer) higher than a recording or standard speed. In any portion spaced apart by several tracks or so, there exists a low possibility that the content of the image changes in the extreme. Therefore, despite a replacement with the data read out from the preceding track, the resulting image is substantially kept free from incongruous visual impression.

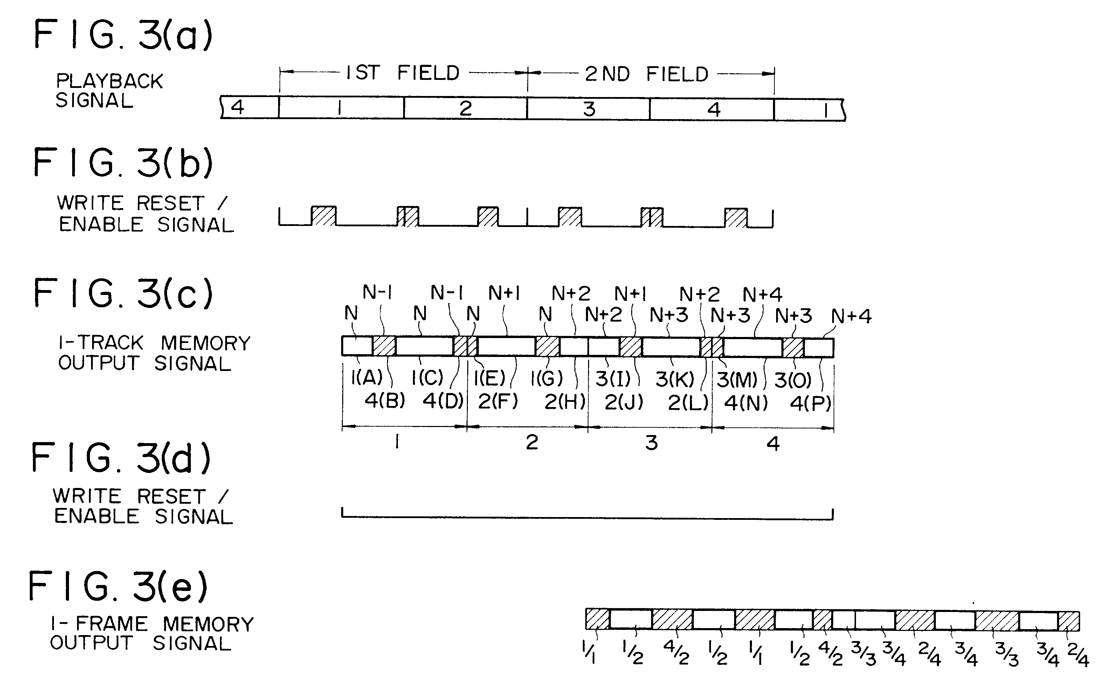

Figure 3 is a timing chart of the memory control signals and the video signal in an exemplary case where a noiseless search is executed at a 2.5-fold speed (N = 2) by the use of a 1-track (1/2 field) memory and a 1-frame memory (a 1/4-field memory and a 1-field memory relative to the capacity for one channel). In this chart, there are shown the data of merely one channel for the sake of convenience.

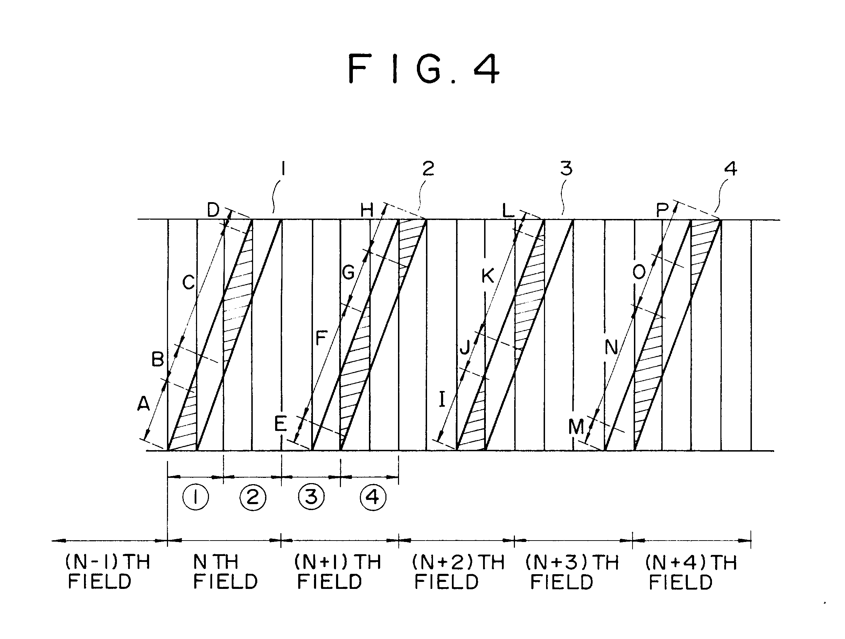

In Figure 3, a playback signal (a) is shown with numerals 1 to 4 which are enclosed with frames and denote the oblique scanning loci of the heads across the tape (tracks or segments in a fast playback operation) as illustrated in Figure 4, representing merely the extraction of the thick-line portion (one channel) in Figure 1. More specifically, the numerals 1 to 4 in the frames denote a 1st scanning track, a 2nd scanning track, a 3rd scanning track and a 4th scanning track, respectively.

The playback signal is written in a memory having a 1-track storage capacity. In Figure 3(b), the shaded portion represents a high-level duration corresponding to a noise bar area, and the operation of writing the signal in the 1-track memory is inhibited during such high-level time. The writing operation is executed during such low-level time in Figure 3(b).

Figure 3(c) shows the output signal from the 1-track memory, in which numerals 1 to 4 denote the tracks corresponding to those in Figures 3(a) and 4, respectively. Reference symbols (A) to (P) denote the signals read out from the portions A to P shown in Figure 4.

In Figure 3(c), bled portions enclosed with thick frames represent the data read out normally from the corresponding azimuth tracks (recording tracks). Meanwhile the shaded portion represents the period during which the operation of writing the signal in the 1-track memory is inhibited in Figure 3(b). The data during such period are replaced with the data read out from the preceding track.

In further detail, the individual data are composed as follows.

1(A) denotes the data read out normally from the shaded portion A of the Nth field in Figure 4.

4(B) denotes a noise-bar area B in the Nth field shown in Figure 4. Since the data read out from the Nth field is inhibited from being written in the 1-track memory during this period, such data are replaced with the data obtained from the corresponding portion of the (N - 1)th field recorded already in the 1-track memory at the preceding scanning time.

1(C) denotes the data read out normally from the shaded portion C of the Nth field in Figure 4.

4(D) denotes a noise-bar area corresponding to the bled portion D of the Nth field in Figure 4. During this period, the data read out from the Nth field are inhibited from being written in the 1-track memory, and there are written instead the data obtained from the corresponding portion of the (N - 1)th field recorded already at the preceding scanning time.

The data of the 2nd track is composed as follows.

1(E) denotes a noise-bar area corresponding to the bled portion E of the (N + 1) th field in Figure 4. Since data writing is inhibited during this period, the signal of such area is replaced with the data obtained from the portion (A) of the Nth field at the preceding scanning time.

2(F) denotes the data read out normally from the shaded portion F of the (N + 1) th field in Figure 4.

1(G) denotes a noise-bar area corresponding to the bled portion G of the (N + 1)th field in Figure 4. Since data writing is inhibited during this period, the signal of such area is replaced with the data C of the Nth field obtained at the preceding scanning time.

2(H) denotes the data read out normally from the shaded portion H of the ( N + 2 ) th field in Figure 4.

With regard to the 3rd and 4th tracks also, each portion read out normally from the scanned track is represented by a thick frame, and each shaded portion corresponds to the noise-bar area replaced with the data of the preceding track.

Figure 3(d) shows a write reset/enable signal, and the data are written in the 1-frame memory when the level of this signal is low. Figure 3(e) shows an output signal of the 1-frame memory, in which the data of the 1st track and that of the 2nd track are deshuffled as the respective data are outputted line by line alternately. Similarly with regard to the 3rd and 4th tracks also, the data are deshuffled in the same manner. However, as described above, practical deshuffling is performed in relation to the other channel as well.

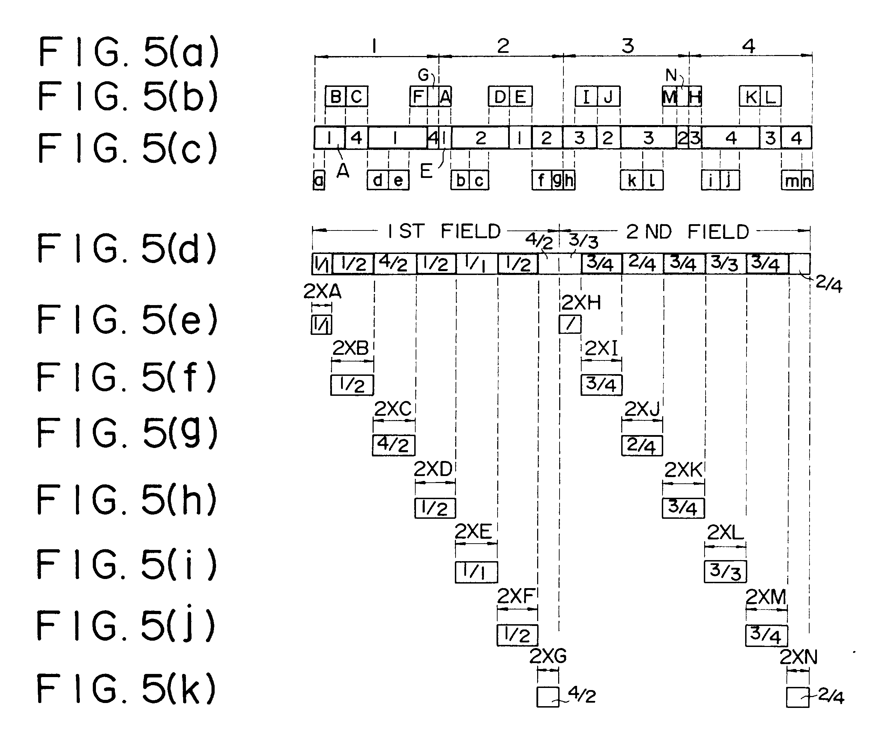

Figure 5 illustrates a process where the signal of Figure 3(e) is outputted, and Figure 5(b) shows the output signal of the 1-track memory in Figure 3(c) with the exception of the shaded portion thereof. Meanwhile in Figure 5(d), there is shown the output signal of the 1-frame memory in Figure 3(e) with the exception of the shaded portions thereof.

In the 1st field, the data of the 1st track and that of the 2nd track are read alternately as follows. First read data:

The portion A of the 1st track and the portion E of the 2nd track are read alternately from the respective top lines. The portion A of the 1st track enclosed with a thick-line frame represents the data read from the normal track, but the portion E of the 2nd track represents the data replaced with the data of the 1st track. Such data are read alternately line by line as recorded in Figure 2. The first reading is terminated upon completion of reading the entire portion E. Since the data length (number of lines) after such complete reading is dominated by the length of the shorter data (number of lines) and becomes a duplicate thereof, the length of the shorter data is denoted by capital letters in Figures 5(a) and 5(c), while the length of the longer data is denoted by small letters, respectively.

Therefore the data of the length A shown in Figure 5(a) are read from the 2nd track, and the data included in the portion A of the 1st track and having a length equal to the length A, that is, the data a shown in Figure 5(c), are read from the 1st track.

Consequently the length of the first read data becomes twice the length A shown in Figure 5(a) (which is also twice the length a in Figure 5(c)). The data read from the 1st track during this period are that obtained therefrom directly, while the data corresponding to that read from the 2nd track are that replaced with the data of the 1st track. Accordingly, during this period, the data of the 1st track are read with respect to both tracks, and therefore such data are expressed as 1/1 in the diagram. The content enclosed with a thin-line frame signifies that it includes the replaced data.

### Second read data:

Since the data obtained by the first reading are composed of the portion a of the 1st track in Figure 5(c) and the portion A of the 2nd track, the second read data are composed of the portions following. More specifically, they are the portion B of the 1st track in Figure 5(a) (the portion not yet read out of the data A) and the portion b in Figure 5(c) equal in length to the portion B of the 2nd track. The data obtained during this period are those read normally from both the 1st and 2nd tracks, and are therefore enclosed with thick-line frames. A left numeral 1 of 1/2 denotes the 1st track, while a right numeral 2 thereof denotes the 2nd track.

### Third read data:

Since the data obtained by the second reading are composed of the portion B of the 1st track in Figure 5(a) and the portion b of the 2nd track, the third read data are composed of the portions following. More specifically, they are the portion C of the 1st track in Figure 5(a) and the portion ca of the 2nd track in Figure 5(c). The data of the 1st track are the replaced one read from the 4th track at the preceding scanning time, and the data of the 2nd track are the one read normally therefrom. Accordingly such data are expressed as 4/2 in the diagram, where a left numeral 4 denotes the data read from the 4th track, while a right numeral 2 denotes the data read from the 2nd track. They are enclosed with a thin-line frame as one of them is the replaced data.

Thereafter the data are sequentially read out in the same manner as above so that, as shown in Figure 5(d), the data of the 1st and 2nd tracks are alternately read and deshuffled. Meanwhile the data of the 3rd and 4th tracks are also read and deshuffled alternately in the same manner.

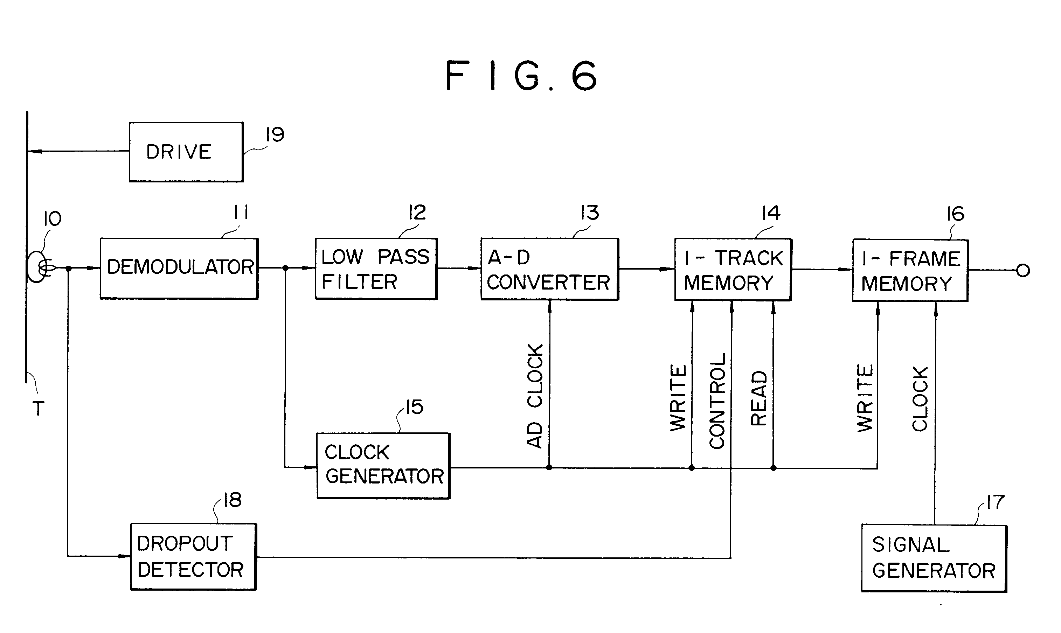

Figure 6 is a block diagram of an apparatus to perform such reading operation. A magnetic tape T is moved by a drive 19 (playback means) at a high (N + 1/2)-fold speed in comparison with a standard playback (or recording) speed. The data read by a playback head 10 (playback means) is demodulated by a demodulator 11 and then is supplied via a low-pass filter 12 to an analogue-to-digital (A/D) converter 13, where the data are converted to a digital signal in synchronism with a clock signal supplied from a clock generator 15. The clock generator 15 serves to produce a clock signal from the output of the demodulator 11. The digital signal is written in a 1-track memory 14 (memory means) synchronously with the clock signal supplied from the clock generator 15. In response to detection of any noise bar by a drop-out detector 18 (detection means), the data are inhibited from being written in the 1-track memory 14. (In reproducing the data from a different-azimuth track, the playback level of the RF signal is lowered as in a case with occurrence of any drop-out, so that the noise bar can be detected similarly to such drop-out.) The data written in the 1-track memory 14 are transferred to a 1-frame memory 16 (memory means) synchronously with the clock signal. The data thus written in the 1-frame memory 16 is deshuffled and read in accordance with a clock signal supplied from a signal generator 17 (control means).

More specifically, the data writing and reading operation (deshuffling) relative to the 1-frame memory 16 is performed by the same rule as that in the standard-speed playback mode, and there is no necessity of executing any address control or the like different from that in the standard-speed playback mode. In this embodiment, therefore, the same timing control as in the standard playback mode can be executed in the fast playback mode as well consequently to simplify the control action.

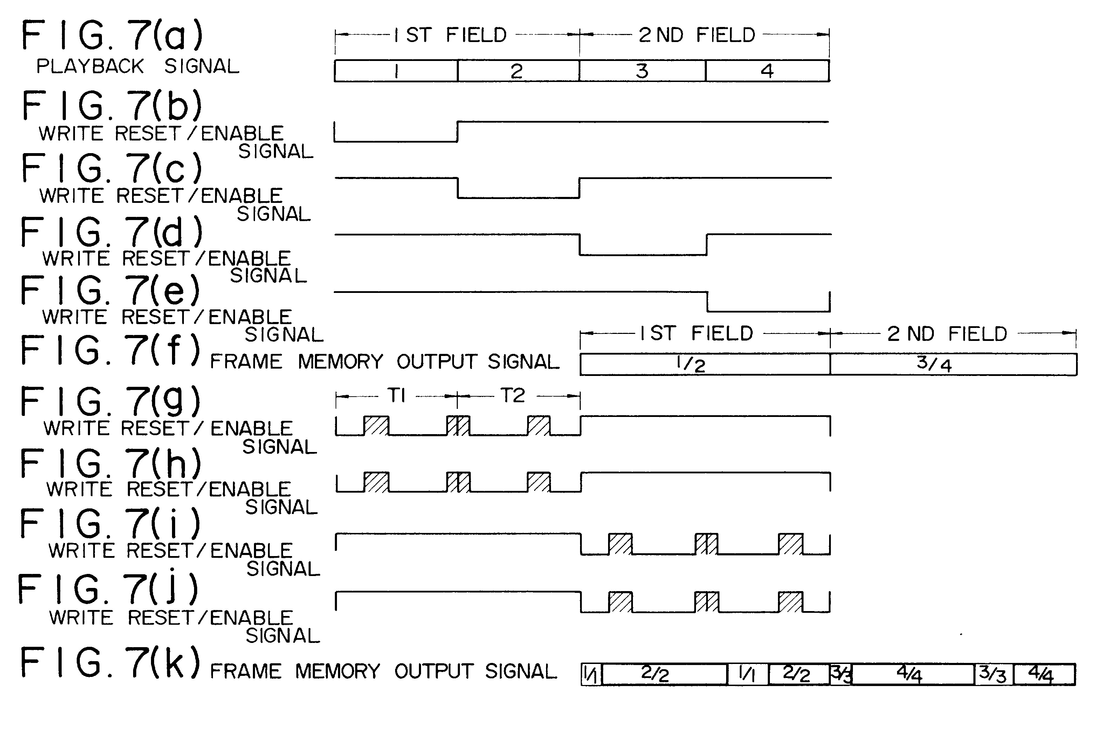

Figure 7 is a timing chart of signals produced to perform a noiseless search in an arrangement with a 1-frame memory (consisting of four 1-track memories). Figures 7(b) to 7(f) relate to the standard playback mode, wherein the signals of the four tracks are written respectively in a four-phase memory (four 1-track memories) and, after completion of writing the data of one field, deshuffled signals are outputted in a playback operation.

Figures 7(g) to 7(k) relate to the fast playback mode, wherein the 1st track memory is once reset after completion of writing the data of the 1st track, and then the data of the 2nd track are overwritten in the same address. The 2nd track memory is processed in the same manner as the 1st track memory. The 3rd track memory is once reset after completion of writing the data of the 3rd track, and then the data of the 4th track are overwritten in the same address. The 4th memory is processed in the same manner as the 3rd memory. Describing an example of Figure 7(g) concerned with the 1st track memory, initially the data of the 1st track are written during a time period T1, and then the data of the 2nd track are overwritten in the same address during a time period T2.

In the chart, each shaded portion signifies a duration where writing is inhibited to eliminate a noise bar. Therefore, when overwriting is performed during the period T2 on the data written already during the period T1, the overwriting of any data does not occur in the shaded portion of the period T2. Consequently, in such shaded portion, the data written during the period T1 are left unchanged. It follows that the shaded portion of the period T2 is replaced with the data obtained during the period T1.

The same data are written in the two (1st and 2nd) memories for the 1st field and also the same data are written in the two (3rd and 4th) memories for the 2nd field, so that when the data are alternately read from the 1st memory for the 1st track and the 2nd memory for the 2nd track or from the 3rd memory for the 3rd track and the 4th memory for the 4th track and then are deshuffled, the result is such that the same line is read twice to replace the data, as shown in Figure 7(k).

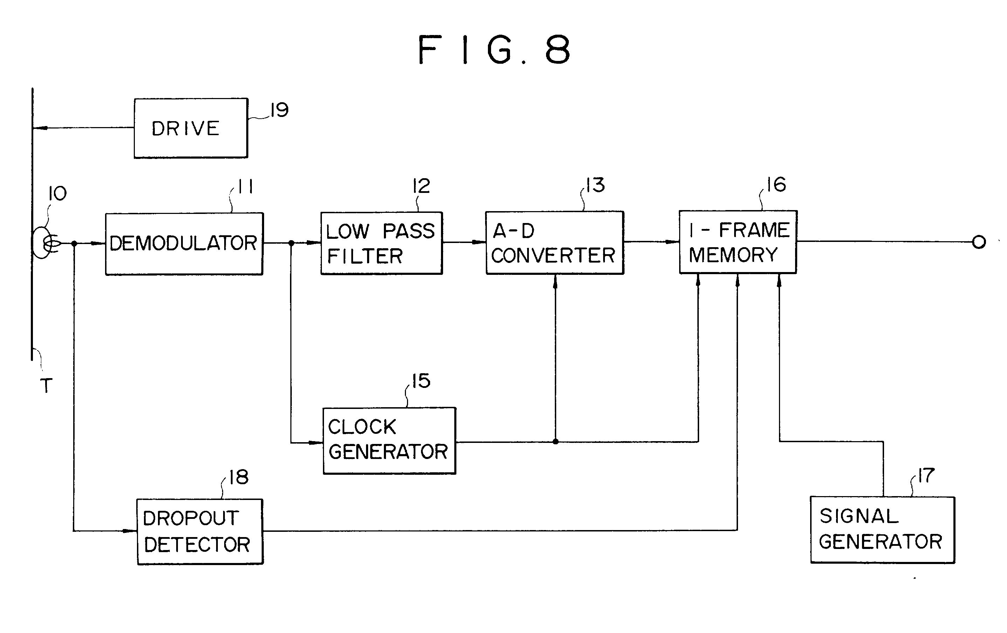

Figure 8 is a block diagram of an apparatus for realizing such a reading operation, wherein the difference from the aforementioned apparatus of Figure 6 resides in that the 1-track memory 14 is omitted. In this embodiment, therefore, the memory control method in the standard playback mode needs to be different from that in the fast playback mode as described.

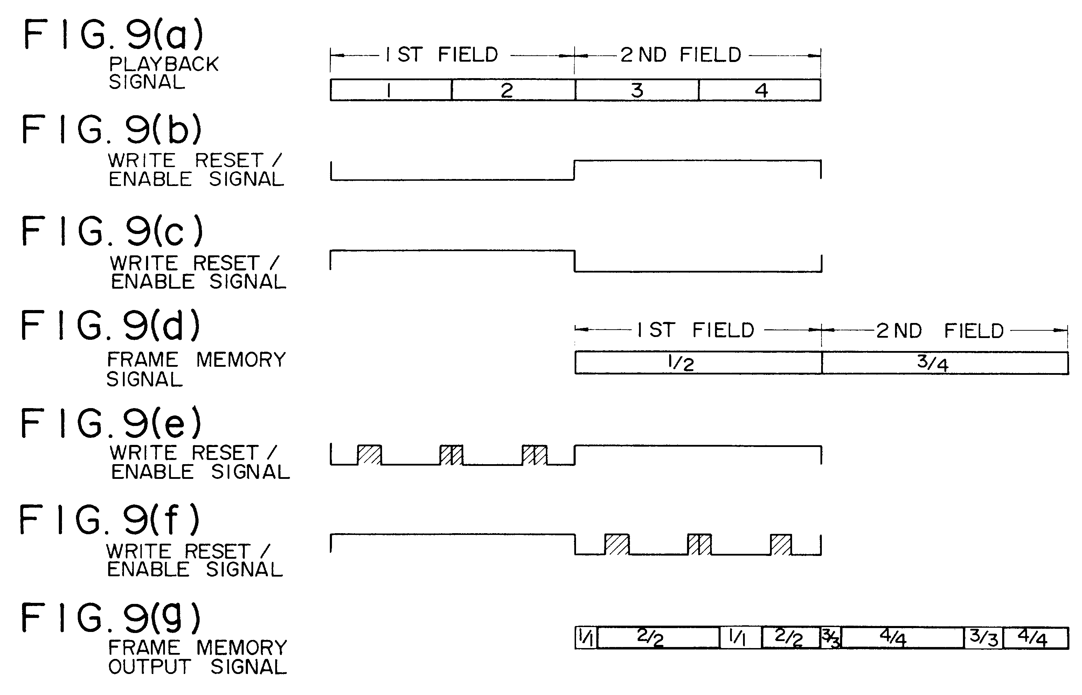

Figure 9 is a timing chart of signals in a constitution using two 1-field memories (two 2-track memories), in which Figures 9(b) to 9(d) relate to the standard playback mode. The 2-phase memories are divided in use for the 1st field and the 2nd field. More specifically, the data of the 1st and 2nd tracks are written in different addresses of the 1st field memory, and the data of the 3rd and 4th tracks are written in different addresses of the 2nd field memory, as shown in Figures 9(b) and 9(c). The data read out therefrom are deshuffled field-by-field as shown in Figure 9(d).

Figures 9(e) to 9(g) relate to the fast playback mode. In this operation also, the data of the 1st field and that of the 2nd field are written in the individual memories. In every field, each memory is reset for writing per track, and then the data of one track are written twice (overwritten) in the same address. Meanwhile in a reading operation, the data in the same address (the data of the same line) are read twice to be deshuffled, so that an output signal similar to Figure 7(k) is obtained.

This embodiment is fundamentally so composed as shown in Figure 8, wherein the 1-frame memory 16 is controlled by the signal generator 17 in such a manner that, in a standard playback mode, the data of one line are read out alternately from the 1st-track address and the 2nd-track address in the 1st field memory constituting the 1-frame memory 16. Such control action is executed similarly with respect to the 2nd field memory. However, in a fast playback mode, the signal generator 17 supplies address information to the 1-frame memory 16 in addition to the clock signal so that the data of one track are written twice in the same address, and the data of one track are read out twice from the same address.

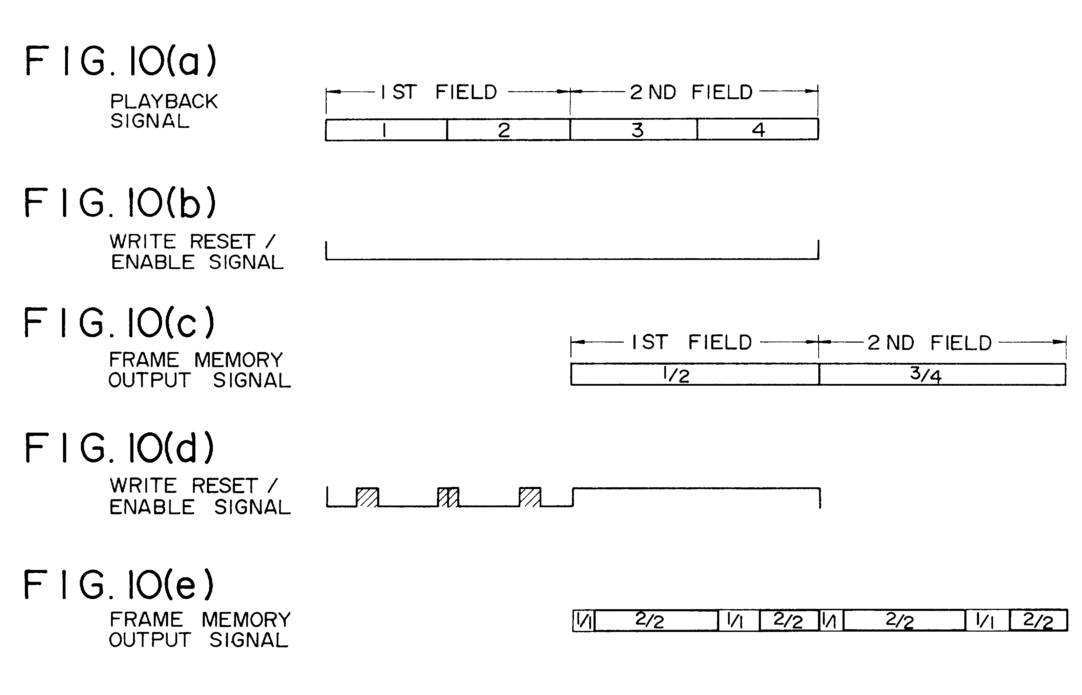

Figure 10 is a timing chart of signals in another exemplary case where the 1-frame memory 16 in Figure 8 is composed of a single-phase 1-frame memory, in which Figures 10(b) and 10(c) relate to a standard playback mode, and Figures 10(d) and 10(e) to a fast playback mode, respectively.

During the standard playback mode, the data of the 1st to 4th tracks are sequentially written in mutually different addresses of the 1-frame memory by the signal generator 17, and deshuffling of the data is started upon complete storage of the data corresponding to one field.

Meanwhile during the fast playback mode, the memory is reset for writing per track in the 1st field, and the 2nd track data are written over the 1st track data, but the 2nd field data (3rd and 4th track data) are not written. In the reading operation, the same line is read twice for deshuffling the data. In this embodiment, the same image as that of the 1st field is repeatedly outputted in the 2nd field, so that the data of the same line are read four times.

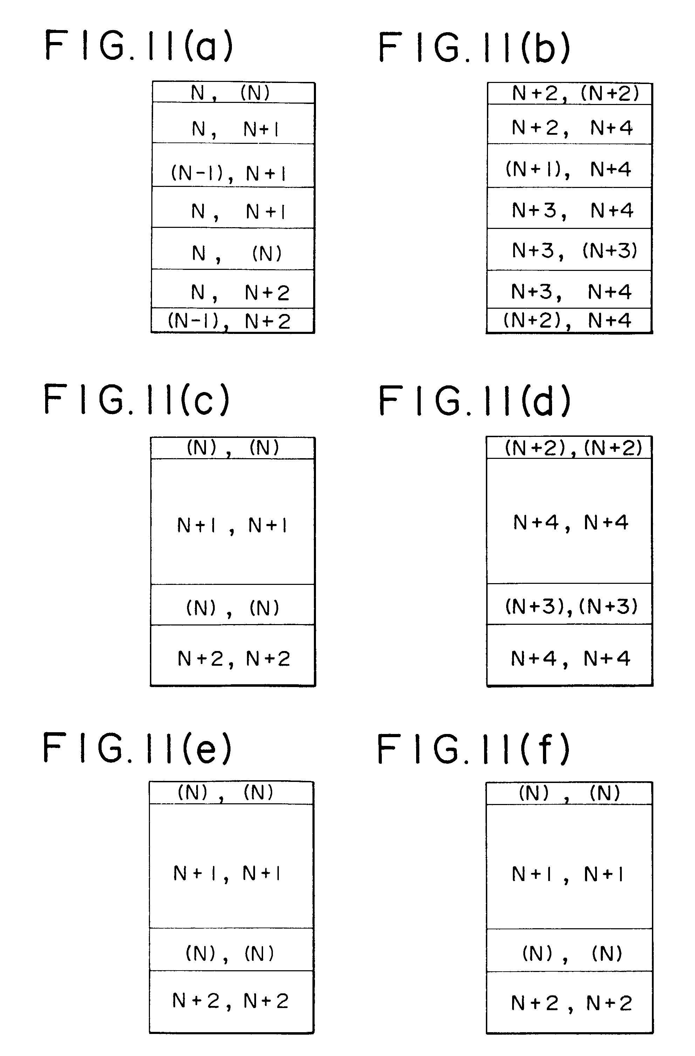

Thus, three kinds of images can be obtained by the four kinds of memory described. Figure 11 illustrates how the respective output signals are reproduced on a monitor screen. In this diagram, N - 1 to N + 4 denote corresponding fields of Figure 4 respectively, and parentheses signify replaced data. Figures 11(a) and 11(b) show the signals reproduced by the method of Figure 3 using a 1-track memory and a 1-frame memory, in which (a) and (b) represent the 1st field and the 2nd field respectively.

Figures 11(c) and 11(d) show the signals reproduced by the method of Figures 7 and 9 using four 1-track memories or two 1-field memories, in which (c) and (d) represent the 1st field and the 2nd field, respectively.

Figures 11(e) and 11(f) show the signals reproduced by the method of Figure 10 using a single-phase 1-frame memory, in which the former relates to the 1st field and the latter to the 2nd field.

As obvious from the above examples, the method of Figures 11(a) and 11(b) using a 1-track memory and a 1-frame memory is the best of all in view of the resolution. This method has another advantage that the timing control need not be changed in both the standard playback mode and the fast playback mode. However, since signal lines having a time difference are reproduced every two lines according to this method, the image becomes striped when in relatively quick motion, so that the image is difficult to see. Meanwhile according to the method shown in Figures 11(c) and 11(d), the data of one track are overwritten in the same address, and the data of the same line are read out twice to be deshuffled, hence reducing the possibility that the lines of mutually different fields are mixedly existent as compared with the example of Figures 11(a) and 11(b), whereby the image is rendered easier to see. Furthermore, the method of using a single-phase 1-frame memory has an advantage that, although the resolution is lower as shown in Figures 11(e) and 11(f), the distance between the lines displayed simultaneously on the image of one frame is two fields at most, so that a natural image can be obtained even when it is in relatively quick motion. Thus, it becomes possible to achieve a fast search while reproducing a natural image even in relatively quick motion without the necessity of any compensation by motion vectors or the like.

As described above, the signal portion corresponding to a noise bar is replaced with the preceding data in a fast playback operation performed at a high ( N + 1/2)-fold speed, so that generation of any noise bar can be prevented merely by deshuffling the data in the same manner as in a standard playback mode. Moreover, a plurality of lines in each field are composed of the same lines, so that a satisfactory image that can be seen even in relatively quick motion in a fast search, using a simple arrangement without the necessity of any particular compensation by motion vectors or the like.

## Claims

1. A video signal reproducing apparatus for fast playback of a magnetic tape recording medium (T) where a video signal of one field is recorded on a plurality of tracks after being shuffled in such a manner that mutually adjacent lines on an image are positioned on different tracks, the apparatus comprising:
a playback means (10) including a rotary drum with a plurality of magnetic heads having mutually different azimuths for fast playing back said recording medium (T) at a high (N + 1/2)-fold speed, where N is an integer, in comparison with a standard speed;
a memory means (14, 16) for storing the video signal reproduced by said playback means (10);
a detector means (18) for detecting a noise bar in a manner to inhibit the signal writing in said memory means (14, 16) at the timing of generation of such noise bar; and
means (15, 17) for controlling the writing in and reading out of the video signal from the memory means (14, 16) such that the noise bar of a track is replaced by a video signal from a preceding track of the same azimuth and the video signal is deshuffled by the same rule as that in the standard-speed playback mode.

2. Apparatus according to claim 1, wherein the controlling means (17) controls the operation of writing the signal in or reading out the signal from said memory means (14, 16) in such a manner that a plurality of lines in each field are composed of the same lines.

## Patentansprüche

1. Videosignalwiedergabegerät zum schnellen Abspielen eines Magnetband-Aufzeichnungsmediums (T), auf dem ein Videosignal eines Halbbilds in mehreren Spuren aufgezeichnet ist, nachdem es so gemischt wurde, daß einander benachbarte Zeilen eines Bildes in verschiedenen Spuren liegen, wobei das Gerät aufweist:
eine Wiedergabeeinrichtung (10) mit einer rotierenden Trommel, an der mehrere Magnetköpfe mit wechselweise unterschiedlichen Azimutwinkeln angeordnet sind, für das schnelle Abspielen des Aufzeichnungsmediums (T) mit einer hohen Geschwindigkeit, die das (N+1/2)-fache einer Standard-Geschwindigkeit beträgt, wobei N ganzzahlig ist,
eine Speichereinrichtung (14, 16) zum Speichern des von der Wiedergabeeinrichtung (10) reproduzierten Videosignals,
eine Detektoreinrichtung (18) zum Detektieren von Rauschbalken in einer solchen Weise, daß während der Zeit, in der ein solcher Rauschbalken erzeugt wird, das Einschreiben des Signals in die Speichereinrichtung (14, 16) gesperrt wird, und
eine Steuereinrichtung (15, 17) zur Steuerung des Einschreibens und Auslesens des Videosignals in die bzw aus der Speichereinrichtung (14, 16) in der Weise, daß der Rauschbalken einer Spur durch ein Videosignal aus einer vorangehenden Spur mit dem gleichen Azimutwinkel ersetzt wird und daß das Videosignal nach der gleichen Vorschrift entmischt wird wie in dem Wiedergabemodus mit Standard-Geschwindigkeit.

2. Gerät nach Anspruch 1, bei dem die Steuereinrichtung (17) das Einschreiben des Signals in die Speichereinrichtung oder das Auslesen des Signals aus der Speichereinrichtung (14, 16) so steuert, daß in jedem Halbbild mehrere Zeilen aus den gleichen Zeilen bestehen.

## Revendications

1. Appareil de reproduction de signal vidéo pour une lecture rapide d'un support d'enregistrement à bande magnétique (T) où un signal vidéo d'un champ est enregistré sur une pluralité de pistes après avoir été arrangé de manière à ce que des lignes mutuellement adjacentes sur une image soient positionnées sur des pistes différentes, l'appareil comprenant :
un moyen de lecture (10) comprenant un tambour tournant avec une pluralité de têtes magnétiques ayant des azimuts mutuellement différents pour lire rapidement ledit support d'enregistrement (T) à une vitesse élevée de (N + 1/2) fois, où N est un entier, en comparaison avec une vitesse normale ;
un moyen de mémorisation (14, 16) pour stocker le signal vidéo reproduit par ledit moyen de lecture (10) ;
un moyen de détection (18) pour détecter une barre de bruit de manière à empêcher l'écriture du signal dans ledit moyen de mémorisation (14, 16) au moment de la génération de cette barre de bruit ; et
un moyen (15, 17) pour commander l'écriture dans et la lecture du signal vidéo à partir du moyen de mémorisation (14, 16) pour que cette barre de bruit d'une piste soit remplacée par un signal vidéo d'une piste précédente du même azimut et le signal vidéo soit réarrangé par la même règle que dans le mode de lecture à vitesse normale.

2. Appareil selon la revendication 1, dans lequel le moyen de commande (17) commande l'opération d'écriture du signal ou la lecture du signal dans ou à partir dudit moyen de mémorisation (14, 16) de manière à ce qu'une pluralité de lignes dans chaque champ soit composée des mêmes lignes.
